# EUROPEAN PATENT APPLICATION

(11) **EP 4 344 983 A1**
(43) Date of publication of application: **03.04.2024**
(21) Application number: 23200112.3
(22) Date of filing: 27.09.2023
(51) Int. Cl.: B62D 21/11

(54) **BODY FOR VEHICLE**

(30) Priority: 29.09.2022 KR 20220124410
(71) Applicant: Dong Hee Industrial Co., Ltd., Ulsan 44784 (KR)
(72) Inventor: SIM, Hyeon Seok, 16648 Suwon-si, Gyeonggi-do (KR)
(74) Representative: BCKIP Part mbB

(57) **Abstract**

The present invention relates to a body for a vehicle, which secures a fixing strength and durability by optimizing a fixing structure of a suspension arm bracket fixed to a side member, and in the present invention, disclosed is a body for a vehicle including side members disposed at left and right sides of a subframe, and a suspension arm bracket connecting a suspension arm by forming a fixing part in a shape that surrounds the side member and forming a connecting part extending laterally from the fixing part.

## Description

### BACKGROUND OF THE INVENTION

### Field of the Invention

The present invention relates to a body for a vehicle, which secures a fixing strength and durability by optimizing a fixing structure of a suspension arm bracket fixed to a side member.

### Description of the Related Art

A method of assembling a suspension on a separate frame without being directly installed on a body and connecting the suspension to the body is called a subframe method.

When a suspension arm, a link, and the like are installed directly on the body, the stiffness of the body affects the stiffness of the suspension, but when assembled using a subframe, the subframe functions to allow a load to be easily transmitted while increasing the structural stiffness of a vehicle.

The subframe has a structure with a quadrangular shape formed by a combination of four members by installing front and rear cross members in a width direction of the vehicle and installing two side members at both sides in a longitudinal direction of the vehicle.

Among these members, the side member is an important skeletal member for supporting the body and needs to sufficiently secure the strength and stiffness required by the subframe.

The matters explained as the background art are for the purpose of enhancing the understanding of the background of the present invention and should not be taken as acknowledging that they correspond to the related art already known to those skilled in the art.

### Documents of Related Art

(Patent Document 1) KR 10-2011-0062110 A
(Patent Document 2) KR 10-1458702 B

### SUMMARY OF THE INVENTION

The present invention has been made in efforts to solve the above problem and is directed to providing a body for a vehicle, which secures a fixing strength and durability by optimizing a fixing structure of a suspension arm bracket fixed to a side member.

A configuration of the present invention for achieving the object includes side members disposed at left and right sides of a subframe, and a suspension arm bracket connecting a suspension arm by forming a fixing part in a shape that surrounds the side member and forming a connecting part extending laterally from the fixing part.

The fixing part may be formed in a "U" shape and press-fitted into the side member.

The fixing part may be fixed in a shape that surrounds an upper surface and both side surfaces of the side member.

The fixing part and the side member may be bonded by welding along a boundary in which the fixing part and the side member are in contact with each other.

A middle portion of the fixing part may be formed in a shape of a rib, which is branched severally, to be in contact with the side member, and bonded by welding along a boundary in which the rib and the side member are in contact with each other.

The ribs may be formed on a portion in contact with an upper surface of the side member.

The ribs may be formed in a direction perpendicular to a longitudinal direction of the side member.

The ribs may be formed parallel to each other.

A lower end of the fixing part connected to the connecting part may be formed to be longer than the connecting part.

Through the above configuration, according to the present invention, by fixing the fixing part in the shape that surrounds the side member, it is possible to increase the contact area between the suspension arm bracket and the side member, and by physically restricting the left-right directional and downward movements of the side member by the fixing part, it is possible to increase the fixing strength of the suspension arm bracket with respect to the side member and secure stiffness and durability.

Furthermore, by expanding the boundary portion between the fixing part and the side member due to the structure in which the fixing part is press-fitted in the shape that surrounds the side member and the rib, which is branched severally, is in contact with the side member, it is possible to increase the welding area, thereby increasing the fixing force of the suspension arm bracket.

### BRIEF DESCRIPTION OF THE DRAWINGS

FIG. 1 is a view illustrating a shape of a subframe according to the present invention.
FIG. 2 is an enlarged view illustrating a fixed portion of a side member and a suspension arm bracket according to the present invention.
FIG. 3 is a view illustrating the suspension arm bracket according to the present invention.

### DETAILED DESCRIPTION OF THE INVENTION

Hereinafter, embodiments disclosed in this specification will be described in detail with reference to the accompanying drawings, and the same or similar components are denoted by the same reference numerals regardless of the drawing symbols, and overlapping descriptions thereof will be omitted.

The suffixes "module" and "unit" for components used in the following description are given or used interchangeably in consideration of ease of writing the specification and do not have meanings or roles that are distinct from each other by themselves.

In describing the embodiments disclosed in this specification, when it is determined that a detailed description of a related known technology may obscure the gist of the embodiments disclosed in this specification, a detailed description thereof will be omitted. In addition, the accompanying drawings are only for easy understanding of the embodiments disclosed in this specification, and it should be understood that the technical spirit disclosed in this specification is not limited by the accompanying drawings, and all changes, equivalents, or substitutes included in the spirit and technical scope of the present invention are included in the accompanying drawings.

Terms including ordinal numbers such as first or second may be used to describe various components, but the components are not limited by the terms. The terms are used only for the purpose of distinguishing one component from another.

When a first component is described as being "connected" or "coupled" to a second component, it should be understood that the first component may be directly connected or coupled to the second component or a third component may be present therebetween. On the other hand, when the first component is described as being "directly connected" or "directly coupled" to the second component, it should be understood that the third component is not present therebetween.

The singular expression includes the plural expression unless the context clearly dictates otherwise.

In the specification, it should be understood that terms such as "comprise" or "have" are intended to specify that a feature, a number, a step, an operation, a component, a part, or a combination thereof described in the specification is present, but do not preclude the possibility of the presence or addition of one or more other features, numbers, steps, operations, components, parts, or combinations thereof.

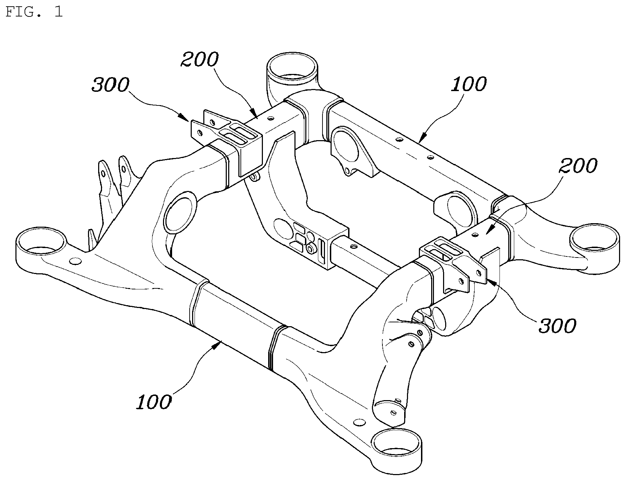

FIG. 1 is a view illustrating a shape of a subframe according to the present invention.

Describing a subframe with reference to the drawing, a subframe having a quadrangular structure is formed by forming each of front and rear cross members 100 in a lateral width direction of a vehicle and forming a side member 200 at each of left and right sides of the front and rear cross members 100 in a longitudinal direction of the vehicle.

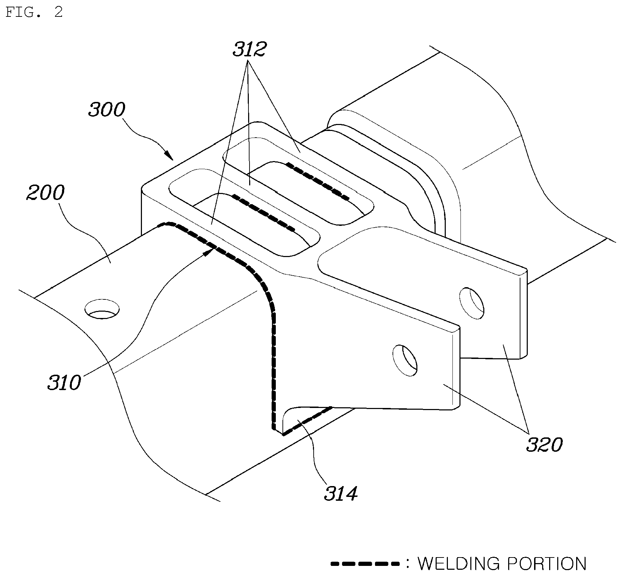

FIG. 2 is an enlarged view illustrating a fixed portion of the side member 200 and a suspension arm bracket 300 according to the present invention, and a suspension arm is connected by fixing the suspension arm bracket 300 to the side member 200.

Referring to the drawing, the subframe includes the side members 200 disposed at left and right sides of the subframe, and the suspension arm bracket 300 connecting a suspension arm by forming a fixing part 310 in a shape that surrounds the side member 200 and forming a connecting part 320 extending laterally from the fixing part 310.

For example, the fixing part 310 is fixedly press-fitted in a shape that surrounds an outer surface of the side member 200.

In addition, the suspension arm bracket 300 is coupled to the suspension arm by integrally forming the connecting part 320 having a quadrangular plate shape extending from a side surface of the fixing part 310 and forming the connecting part 320 on each of a front and a rear of the fixing part 310.

In other words, the fixing part 310 may be fixed in the shape that surrounds the side member 200 to increase a contact area between the suspension arm bracket 300 and the side member 200, thereby increasing a coupling strength of the suspension arm bracket 300.

In particular, the fixing part 310 may be formed in a "U" shape and press-fitted into the side member 200.

Specifically, the fixing part 310 may be fixedly press-fitted in the shape that surrounds an upper surface and both side surfaces of the side member 200.

For example, since the side member 200 is formed in a quadrangular pipe shape, and the fixing part 310 is fixed in a shape that is fitted downward from an upper portion of the side member 200, an inner surface of the fixing part 310 surrounds left and right surfaces and upper surface of the side member 200.

Therefore, by physically restricting the left-right directional and downward movements of the side member 200 by the fixing part 310, it is possible to increase the fixing strength of the suspension arm bracket 300 with respect to the side member 200 and secure stiffness and durability.

In addition, according to the present invention, the fixing part 310 and the side member 200 may be bonded by welding along a boundary in which the fixing part 310 and the side member 200 are in contact with each other.

In other words, since a boundary portion between the fixing part 310 and the side member 200 is expanded due to the structure in which the fixing part 310 is press-fitted in the shape that surrounds the side member 200, it is possible to increase a welding area, thereby increasing the fixing force of the suspension arm bracket 300.

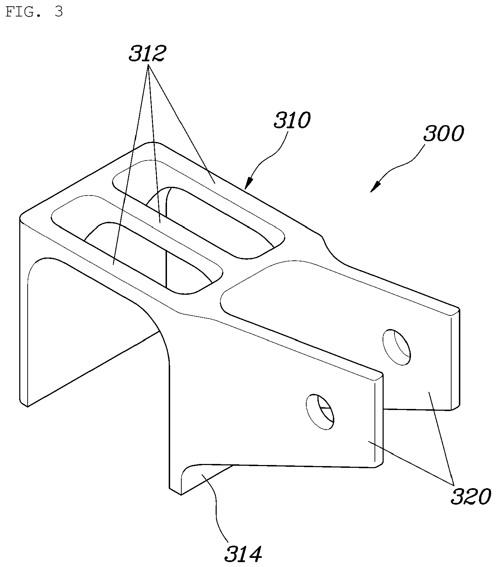

In particular, as illustrated in FIGS. 2 and 3, according to the present invention, a middle portion of the fixing part 310 may be formed in a shape of a rib 312, which is branched severally, to be in contact with the side member 200, and bonded by welding along a boundary in which the rib 312 and the side member 200 are in contact with each other.

For example, the rib 312 is formed in a shape that is branched into three or more and formed in a shape in which an empty space is formed between the ribs 312.

Therefore, since the plurality of ribs 312 are individually in contact with the side member 200, it is possible to further increase a boundary region between the fixing part 310 and the side member 200, thereby increasing the welding area and increasing the fixing strength of the suspension arm bracket 300.

In addition, by welding not only an edge of the fixing part 310 but also the middle of the fixing part 310 so that a welding portion is evenly distributed, it is possible to mitigate a phenomenon in which stress is concentrated on a specific portion.

In addition, the ribs 312 may be formed on a portion in contact with the upper surface of the side member 200.

In other words, the ribs 312 are formed on a middle portion of the "U"-shaped fixing part 310, which covers the upper surface of the side member 200.

In addition, the ribs 312 may be formed in a direction perpendicular to the longitudinal direction of the side member 200, and the ribs 312 may be formed parallel to each other.

In other words, by welding the plurality of ribs 312 in a width direction of the side member 200, it is possible to increase a bonding strength of the rib 312 in the longitudinal direction of the side member 200.

Therefore, by stably restricting the movement of the fixing part 310 in the longitudinal direction of the side member 200, it is possible to increase the fixing strength of the suspension arm bracket 300 and secure stiffness and durability.

Meanwhile, according to the present invention, a lower end of the fixing part 310 connected to the connecting part 320 may be formed to be longer than the connecting part 320.

For example, among the portions in which the fixing part 310 and the connecting part 320 are connected, a lateral upper end of the fixing part 310 and an upper end of the connecting part 320 are formed in a shape that is connected flat.

However, a lateral lower end of the fixing part 310 is formed to be longer than a lower end of the connecting part 320 downward and has a shape of a flange 314.

Therefore, since a load transmitted from the connecting part 320 is supported by being distributed through the flange 314, it is possible to increase a downward support force against an external force.

Meanwhile, although only the above-described specific examples have been described in detail in the present invention, it is apparent to those skilled in the art that various changes and modifications are possible within the technical scope of the present invention, and it goes without saying that these changes and modifications fall within the scope of the appended claims.

### DESCRIPTION OF REFERENCE NUMERALS

| | | | |
|---|---|---|---|
| 100: | cross member | 200: | side member |
| 300: | suspension arm bracket | 310: | fixing part |
| 320: | rib | 314: | flange |
| 320: | connecting part | | |

## Claims

1. A body for a vehicle, comprising:
side members disposed at left and right sides of a subframe; and
a suspension arm bracket connecting a suspension arm by forming a fixing part in a shape that surrounds the side member and forming a connecting part extending laterally from the fixing part.

2. The body of claim 1, wherein the fixing part is formed in a "U" shape and press-fitted into the side member.

3. The body of claim 1 or claim 2, wherein the fixing part is fixed in a shape that surrounds an upper surface and both side surfaces of the side member.

4. The body of any one of the preceding claims, wherein the fixing part and the side member are bonded by welding along a boundary in which the fixing part and the side member are in contact with each other.

5. The body of any one of the preceding claims, wherein a middle portion of the fixing part is formed in a shape of a rib, which is branched severally, to be in contact with the side member, and bonded by welding along a boundary in which the rib and the side member are in contact with each other.

6. The body of claim 5, wherein the ribs are formed on a portion in contact with an upper surface of the side member.

7. The body of claim 5, wherein the ribs are formed in a direction perpendicular to a longitudinal direction of the side member.

8. The body of claim 5, wherein the ribs are formed parallel to each other.

9. The body of claim 1, wherein a lower end of the fixing part connected to the connecting part is formed to be longer than the connecting part.
